# EUROPÄISCHE PATENTANMELDUNG

(11) **EP 0 525 899 A1**
(43) Veröffentlichungstag der Anmeldung: **03.02.1993**
(21) Anmeldenummer: 92202297.5
(22) Anmeldetag: 24.07.1992
(51) Int. Cl.: H04N 17/00

(54) **Verarbeitungseinheit für mindestens ein Fernsehsignal**

(30) Priorität: 01.08.1991 DE 4125460
(71) Anmelder: Philips Patentverwaltung GmbH, 22335 Hamburg (DE); Philips Electronics N.V., 5621 BA Eindhoven (NL)
(72) Erfinder: Schmidt, Friedrich, c/o Philips Patentverwaltung, W-2000 Hamburg 1 (DE)
(74) Vertreter: Volmer, Georg, Dipl.-Ing.

(57) **Zusammenfassung**

Die Erfindung bezieht sich auf eine Verarbeitungseinheit für mindestens ein Fernsehsignal, die wenigstens einen Testgenerator (29 bis 31) und eine Auswerteschaltung (32 bis 34) enthält. Der Testgenerator ist mit einem Eingang eines Schaltungsteils der Verarbeitungseinheit gekoppelt und ist zur Einspeisung wenigstens eines Testsignals in Zeitabschnitte des Fernsehsignals vorgesehen. Die Auswerteschaltung ist mit einem Ausgang des Schaltungsteils der Verarbeitungseinheit gekoppelt und ist zum Vergleich eines sich am Ausgang der Schaltungseinheit ergebenden Ausgangstestsignals und zur Abgabe einer Fehlermeldung bei Abweichung des Ausgangstestsignals von einem vorgegebenen Mustersignal vorgesehen.

## Beschreibung

Die Erfindung bezieht sich auf eine Verarbeitungseinheit für mindestens ein Fernsehsignal. Eine solche Verarbeitungseinheit kann beispielsweise eine Einheit zur Verarbeitung von Rot-, Grün- oder Blau-Signalen einer HDTV-Fernsehkamera in ein HDMAC-Signal sein. Unter dem Begriff "Fernsehsignal" sind Komponentensignale (z.B. ein Rot-Signal, ein Farbdifferenzsignal, ein Luminanzsignal usw.), ein verarbeitetes Komponentensignal oder mehrere zusammengefaßte Komponentensignale zu verstehen.

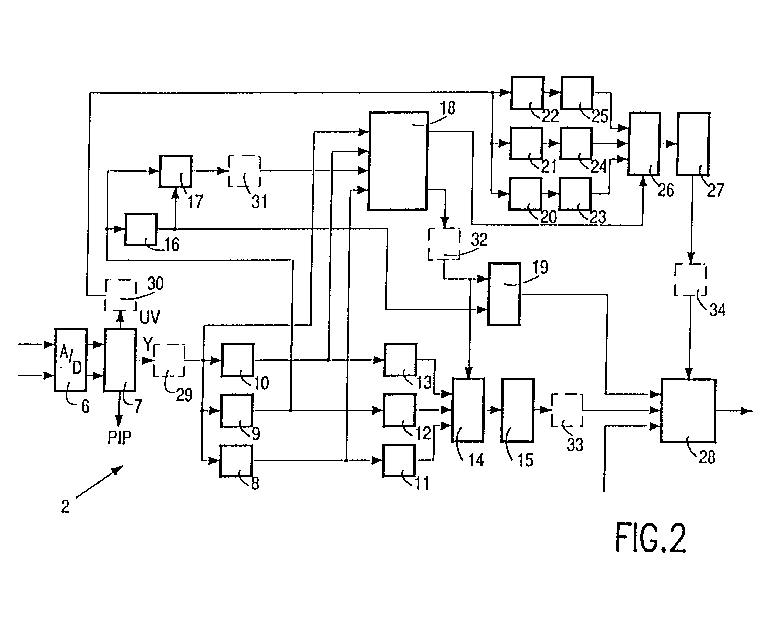

Aus dem Aufsatz "HD-MAC-Übertragung mit 140 MBit/s" von M. Gendsior, J. Wenger, J. Witzany, ntz, Band 42, 1989, Heft 9, Seiten 638 bis 647, ist z.B. eine solche Verarbeitungseinheit für ein Fernsehsignal aus Fig. 2, Seite 640, bekannt. Hier wird jeweils ein Coder zur Erzeugung von HDMAC-Signalen und ein Decoder zur Dekodierung der HDMAC-Signale gezeigt.

Der Erfindung liegt die Aufgabe zugrunde, eine Verarbeitungseinheit für mindestens ein Fernsehsignal zu schaffen, mit der auf einfache Weise und ohne große Verzögerungszeiten ein Fehler, der von einem Schaltungsteil der Verarbeitungseinheit im Betrieb verursacht wird, zu ermitteln.

Gelöst wird diese Aufgabe durch eine Verarbeitungseinheit für mindestens ein Fernsehsignal, die wenigstens
- einen mit einem Eingang eines Schaltungsteils der Verarbeitungseinheit gekoppelten Testgenerator zur Einspeisung wenigstens eines Testsignals in Zeitabschnitte des Fernsehsignals und
- eine mit einem Ausgang des Schaltungsteils der Verarbeitungseinheit gekoppelte Auswerteschaltung zum Vergleich eines sich am Ausgang der Schaltungseinheit ergebenden Ausgangstestsignals und zur Abgabe einer Fehlermeldung bei Abweichung des Ausgangstestsignals von einem vorgegebenen Mustersignal enthält.

Bei der Übertragung von Fernsehsignalen über eine Verarbeitungseinheit kann ein Fernsehsignal verfälscht werden, wenn ein Schaltungsteil der Verarbeitungseinheit defekt ist. Zur Überprüfung von wenigstens einem Schaltungsteil der Verarbeitungseinheit ist erfindungsgemäß vorgesehen, ein Testsignal in einen Zeitabschnitt eines Fernsehsignals vor dem Schaltungsteil einzuspeisen und nach Durchlaufen des Testsignals durch das Schaltungsteil zu überprüfen, ob das sich ergebende Ausgangstestsignal am Ausgang des Schaltungsteils unverfälscht ist. Hierzu wird ein Vergleich des Ausgangstestsignals mit einem Mustersignal vorgenommen, welches als unverfälschtes Ausgangstestsignal vorliegt. Zur Einspeisung des Testsignals in einen bestimmten Zeitabschnitt des Fernsehsignals dient der Testgenerator. Die Auswerteschaltung wertet während des bestimmten Zeitabschnittes das im empfangenen Fernsehsignal enthaltene Ausgangstestsignal aus. Das Mustersignal kann in einem Rechner erzeugt werden, dessen Programm ein Abbild der zu testenden Schaltungseinheit darstellt (Referenzsoftware).

Ein HDTV-Fernsehsignal weist periodisch sich wiederholende Zeitabschnitte auf, die Teil eines Bildes sind. Ein solches HDTV-Bild hat 1728 Spalten und 1250 Zeilen, d.h. insgesamt 1728 1250 Bildpunkte. Der eigentliche Bildinformationsbereich, in dem die Luminanz- und Chrominanzinformation übertragen wird, weist 1440 Spalten und 1152 Zeilen auf. Das restliche Bild enthält keine Informationen. Soll während einer Übertragung von Bildern ein Testsignal übertragen werden, so läßt sich dieses in einen bildinformationsfreien Zeitabschnitt (Testbereich), z.B. vor dem Beginn eines Bildinformationsbereiches, einbringen. Es ist auch möglich, in den Bildinformationsbereich Testsignale einzugeben. Dann ist allerdings keine Luminanz- und Chrominanzinformation vorhanden. Testsignale können bestimmte Testsequenzen enthalten, mit denen bestimmte Funktionen innerhalb eines Schaltungsteils überprüft werden können. So kann beispielsweise die Funktion zur Verarbeitung eines Rot-Signals mit einer Testsequenz getestet werden.

In einer Ausführungsform für den Testgenerator ist vorgesehen, daß dieser
- eine erste Analyseschaltung zur Bestimmung von periodisch auftretenden Zeitabschnitten eines Fernsehsignals,
- einen ersten Adreßzähler, der zum Zurücksetzen seines Zählerinhaltes auf einen Anfangswert und zum Starten bzw. Beenden des Zählvorgangs durch die erste Analyseschaltung vorgesehen ist,
- einen ersten Speicher zum Erzeugen von unter einer Adresse des ersten Adreßzählers abgelegten Abtastwerten eines Testsignals und
- einen von der ersten Analyseschaltung gesteuerten Umschalter enthält, der in seiner ersten Stellung zur Weiterleitung des Testsignals und in seiner zweiten Stellung zur Weiterleitung des Fernsehsignals an ein Schaltungsteil der Verarbeitungseinheit vorgesehen ist.

Die erste Analyseschaltung bestimmt bei einer gleichzeitigen Verarbeitung von Bildinformationen den Testbereich, in dem wenigstens ein Testsignal übertragen wird, und bei keiner Übertragung von Bildinformationen, zusätzlich den Bildinformationsbereich zur weiteren Verarbeitung von wenigstens einem Testsignal in diesem Bereich. Der erste Speicher ist zur Erzeugung eines Testsignals vorgesehen. Dieses Testsignal bildet eine Folge von Abtastwerten, die unter Adressen im ersten Speicher abgelegt sind und von dem ersten Adreßzähler aufgerufen werden. Der erste Adreßzähler wird von der ersten Analyseschaltung freigegeben, wenn eine Änderung seines Zählerinhaltes vorgenommen werden soll. Die erste Analyseschaltung steuert auch den Umschalter, der in seiner ersten Stellung das Testsignal und in seiner zweiten Stellung das Fernsehsignal an ein Schaltungsteil liefert.

Die erste Analyseschaltung weist einen Zeitabschnitte des Fernsehsignals zählenden ersten Abschnittszähler und eine erste, die Zählerstände zur Erzeugung von Steuersignalen für den ersten Adreßzähler und den Umschalter auswertende Dekoderschaltung auf. Der erste Abschnittszähler zählt die Bildpunkte eines Bildes. Die Zählerstände wertet die erste Dekoderschaltung aus. Während der Testbereich-Zeitabschnitte gibt die erste Dekoderschaltung den ersten Adreßzähler frei, so daß diese Adressen für den ersten Speicher erzeugen kann.

In einer Ausführungsform für die Auswerteschaltung ist vorgesehen, daß diese
- eine zweite Analyseschaltung zur Bestimmung von periodisch auftretenden Zeitabschnitten eines Fernsehsignals,
- einen zweiten Adreßzähler, der zum Zurücksetzen seines Zählerinhaltes auf einen Anfangswert und zum Starten bzw. Beenden des Zählvorgangs durch die zweite Analyseschaltung vorgesehen ist,
- einen zweiten Speicher zum Erzeugen von unter einer Adresse des zweiten Adreßzählers abgelegten Abtastwerten eines Mustersignals und
- eine Vergleichsschaltung zum Vergleichen des Mustersignals und des Ausgangstestsignals und zum Ausgeben einer Fehlermeldung bei Abweichung des Ausgangstestsignals von dem Mustersignal enthält.

Die zweite Analyseschaltung bestimmt ebenso wie die erste Analyseschaltung Bereiche zur Erzeugung eines Signals. Der zweite Speicher, der Adressen von dem zweiten Adreßzähler erhält, dient in diesem Fall zur Erzeugung eines Mustersignals. In der dem zweiten Speicher nachfolgenden Vergleichsschaltung wird das Mustersignal mit dem aus dem Schaltungsteil empfangenen Ausgangstestsignal verglichen. Wird eine Differenz zwischen dem Mustersignal und dem Ausgangstestsignal festgestellt, so gibt die Vergleichsschaltung eine Fehlermeldung aus.

Die zweite Analyseschaltung weist einen Zeitabschnitte des Fernsehsignals zählenden zweiten Abschnittszähler und eine zweite, die Zählerstände zur Erzeugung von Steuersignalen für den zweiten Adreßzähler und die Vergleichsschaltung auswertende Dekoderschaltung auf. Der zweite Abschnittszähler zählt auch die Bildpunkte eines Bildes. Diese Zählerstände werden von der zweiten Dekoderschaltung ausgewertet. Während einer bestimmten Zeit, in der ein Mustersignal erzeugt werden soll, gibt die zweite Dekoderschaltung den zweiten Adreßzähler frei.

Die erste und zweite Analyseschaltung sind zur Bestimmung eines bildinformationsfreien Zeitabschnittes vorgesehen, in den wenigstens ein Testsignal eingespeist wird. Durch das Eingeben eines Testsignals in einen bildinformationsfreien Zeitabschnitt kann ein Test der einzelnen Schaltungsteile einer Verarbeitungseinheit erfolgen, ohne daß die Bildinformation (Luminanz- und Chrominanzsignal) gestört wird.

Die Schaltungsteile der Verarbeitungseinheit können auch dann getestet werden, wenn keine Bildinformation übertragen werden soll. In diesem Fall kann von der ersten und zweiten Analyseschaltung zusätzlich wenigstens ein Testsignal in den Bildinformationsbereich eingespeist werden.

Eine solche Verarbeitungseinheit läßt sich insbesondere in einer Empfangs- oder Sendeanordnung verwenden, die zur Übertragung von HDTV-Signalen vorgesehen sind. Hierunter sind beispielsweise Studioeinrichtungen, Mischer, Kameras usw. zu verstehen. Diese Digitalsignale verarbeitenden Schaltungen sind komplex, und mit einfachen Testmethoden ist ein Fehler nicht ohne weiteres zu erkennen. Die Erfindung läßt sich vorteilhaft bei solchen komplexen Schaltungen einsetzen, da hiermit auf einfache Art Fehlerquellen detektierbar sind.

Ausführungsbeispiele der Erfindung werden nachstehend anhand der Fig. näher erläutert. Es zeigen:
Fig. 1 ein HDTV-Übertragungssystem,
Fig. 2 eine in dem Übertragungssystem nach

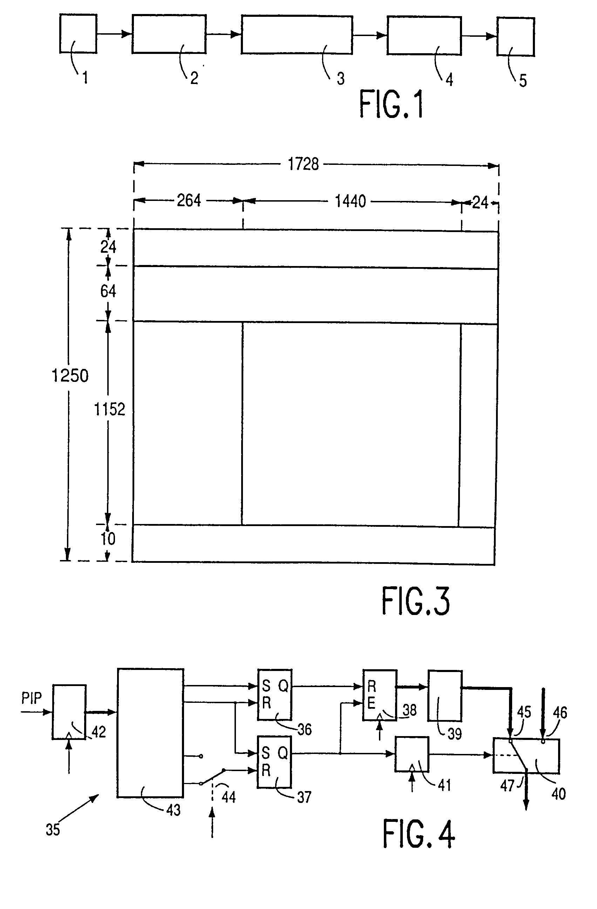

Fig. 1 verwendete Encoder-Schaltung,

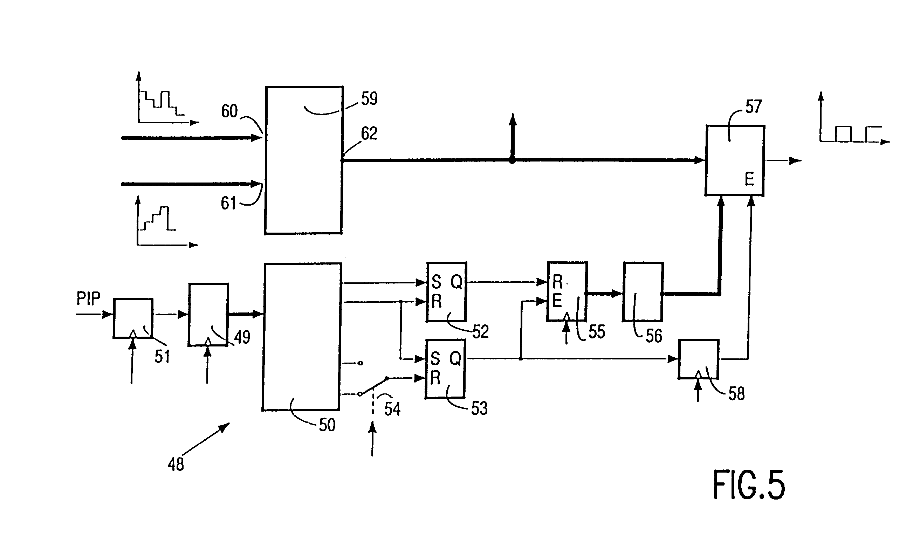

Fig. 3 das Format eines HDTV-Bildes,
Fig. 4 einen in der Encoder-Schaltung nach Fig. 3 verwendeten Testgenerator und
Fig. 5 eine in der Encoder-Schaltung nach Fig. 3 verwendete Auswerteschaltung.

In Fig. 1 ist ein HDTV-Übertragungssystem dargestellt. Das von einer Sendeanordnung, welche aus einer Kamera 1 und einem Encoder 2 besteht, erzeugte HDMAC-Fernsehsignal wird über eine Übertragungsstrecke 3, die beispielsweise als Satellitenübertragungssystem realisiert ist, gegeben. Die von der Übertragungsstrecke 3 abgegebenen HDMAC-Fernsehsignale werden in einer Empfangsanordnung weiterverarbeitet. Diese Empfangsanordnung enthält einen Decoder 4 und ein Empfangsgerät 5. Der Encoder 2 dient zur Bitratenreduktion und zur Codierung in ein HDMAC-Fernsehsignal aus von der Kamera gelieferten Rot-, Grün-und Blau-Signalen. Der Decoder 4 setzt die von der Übertragungsstrecke 3 abgegebenen HDMAC-Fernsehsignale in für das Empfangsgerät 5 geeignete Fernsehsignale um.

In Fig. 2 ist ein schematisch dargestelltes Blockschaltbild eines bekannten Encoders 2 gezeigt. Dieser enthält einen Analog-Digital-Umsetzer 6, der Rot-, Grün- und Blau-Signale und Synchronisationsinformationen von einer Kamera 1 empfängt. Die digitalisierten Signale werden einer Matrix 7 zugeführt, die zwei Farbdifferenzsignale U und V, ein Luminanzsignal Y und ein Signal PIP erzeugt, welches den Beginn der ersten Zeile eines Bildes anzeigen soll.

In Fig. 3 ist das Format eines HDTV-Bildes dargestellt. Die ersten 88 Zeilen eines solchen Bildes enthalten keine Information. Ab der 89. Zeile und der 264. Spalte beginnt der Bildinformationsbereich. Der Bildinformationsbereich endet in der Zeile 1240 und der Spalte 1704. Die restlichen 10 Zeilen enthalten wiederum keine Information.

Das Luminanzsignal Y wird weiter auf drei Filter 8, 9 und 10 gegeben. Das Filter 8 läßt nur Daten passieren, die Bildbereiche schwacher Bewegung oder Standbilder repräsentieren. Das Filter 9 läßt Daten durch, die Bildbereiche mittlerer Bewegung, und das Filter 10 läßt Daten durch, die Bildbereiche schneller Bewegung repräsentieren. Die Ausgangssignale der Filter 8 bis 10 werden in Schaltungen 11 bis 13 unterabgetastet. Von einem Multiplexer 14 wird entschieden, welche unterabgetasteten Ausgangssignale einer Schaltung 11 bis 13 zu einem Konverter 15 durchgelassen werden, der eine Formatumsetzung vornimmt.

Die Ausgangssignale des Filters 9 werden einem Bewegungsschätzer 16 und einem Interpolator 17 geliefert. Der Bewegungsschätzer 16 ermittelt aus jedem ungeraden Halbbild unter Zuhilfenahme der beiden benachbarten geraden Halbbilder Bewegungsvektoren. Der Interpolator 17 rekonstruiert aus zwei aufeinanderfolgenden geraden Halbbildern und den Bewegungsvektoren ein ungerades Halbbild. Dieses ungerade Halbbild und die benachbarten geraden Halbbilder werden einer Entscheidungsschaltung 18 zugeführt. Die Entscheidungsschaltung 18 erhält noch das Luminanzsignal Y von der Matrix 7 und die Ausgangssignale der Filter 8 und 10. Das Ausgangssignal des Interpolators 17 und die Ausgangssignale der beiden Filter 8 und 10 werden mit dem Luminanzsignal Y verglichen. Der Vergleich findet dabei blockweise statt. Ein Block umfaßt mehrere Bildpunkte. Hierbei wird von der Entscheidungsschaltung 18 entschieden, welche Ausgangssignale der Filter 8 bis 10 übertragen werden. Diese Entscheidung wird dem Multiplexer 14 mitgeteilt, der daraufhin seinen Ausgang mit einem Ausgang der Schaltungen 11 bis 13 verbindet.

Des weiteren werden noch die Entscheidung der Entscheidungsschaltung 18 und die Bewegungsvektoren des Bewegungsschätzers 16 dem DATV-Encoder 19 (DATV = Digitally Assisted Television) zugeführt. Im DATV-Encoder 19 werden die Entscheidungen der Entscheidungsschaltung 18 und die Bewegungsvektoren des Bewegungsschätzers 16 verschlüsselt.

Die Farbdifferenzsignale U und V, die von der Matrix 7 geliefert werden, werden noch Filtern 20 bis 22 zugeführt, welche jeweils Daten durchlassen, die Bildbereiche schneller, mittlerer und schwacher Bewegung repräsentieren. Die Ausgangssignale der Filter 20 bis 21 werden in Schaltungen 23 bis 25 unterabgetastet. Ein Ausgangssignal einer Schaltung 23 bis 25 wird für jeweils einen Block über einen Multiplexer 26 zu einem Konverter 27 geführt, der dieselbe Funktion hat, wie der Konverter 15. Gesteuert wird der Multiplexer 26 von der Entscheidungsschaltung 18. Die Ausgangssignale der beiden Konverter 15 und 27 und des DATV-Encoders 19 werden in einem HDMAC-Multiplexer 28 zusammengefaßt. Ebenso werden dem HDMAC-Multiplexer 28 noch Tonsignale und zusätzliche Daten, wie z.B. Videotext, zugeführt. Daraus wird im HDMAC-Multiplexer 28 das HDMAC-Fernsehsignal gebildet.

Zur Überprüfung, ob ein Schaltungsteil des Encoders 2 fehlerfrei arbeitet, sind mehrere Testgeneratoren 29 bis 31 und mehrere Auswerteschaltungen 32 bis 34 in dem Encoder 2 angeordnet. Ein Testgenerator 29 bis 31 blendet in ein Fernsehsignal ein Testsignal ein, das ein oder mehrere Schaltungsteile des Encoders 2 durchläuft. Das sich am Ausgang des Schaltungsteils ergebende Ausgangstestsignal wird mit einem gespeicherten Mustersignal in eine Auswerteschaltung 32 bis 34 verglichen. Weicht das Ausgangstestsignal vom Mustersignal ab, wird eine Fehlermeldung abgegeben, die beispielsweise eine Leuchtdiode oder eine Bildschirmeinheit ansteuert. Ein erster Testgenerator 29 ist zwischen der Matrix 7 und den Filtern 8 bis 10 eingebracht. Ein zweiter Testgenerator 30 ist vor den Filtern 20 bis 22 und ein dritter Testgenerator 31 am Ausgang des Interpolators 17 angeordnet. Eine erste Auswerteschaltung 32 ist zwischen der Entscheidungsschaltung 18 und dem DATV-Encoder 19 angeordnet. Mit dem Ausgang des Konverters 15 ist eine zweite Auswerteschaltung 33 und mit dem Ausgang des Konverters 27 ist eine dritte Auswerteschaltung 34 verbunden.

Ein Testsignal kann beispielsweise in den Zeilen 25 bis 64 (vgl. Fig. 3) untergebracht werden. Falls keine Bildinformation vorliegt, kann auch das Testsignal weiter in dem Bildinformationsbereich untergebracht werden. In diesem Fall ist zusätzlich ein oder weitere Testsignale in den Zeilen 65 bis 1152 vorhanden.

Ein Testgenerator 29, 30 oder 31 ist in der Fig. 4 dargestellt. Dieser enthält eine erste Analyseschaltung 35, zwei RS-Kippglieder 36 und 37, einen ersten Adreßzähler 38, einen ersten Speicher 39, einen Umschalter 40 und eine Verzögerungseinheit 41. Die erste Analyseschaltung 35 besteht aus einem ersten Abschnittszähler 42 und einer ersten Dekoderschaltung 43. Der erste Abschnittszähler 42 wird durch das Synchronisationssignal PIP zurückgesetzt. Mit jedem auftretenden Bildpunkt erhöht der erste Abschnittszähler 42 seinen Zählerinhalt. Die Frequenz des dem ersten Abschnittszählers 42 zugeführten Taktsignals entspricht also der Frequenz der Bildpunktfolge. Der Zählerstand des ersten Abschnittszählers 42 wird von der ersten Dekoderschaltung 43, die aus mehreren Logikbausteinen besteht, ausgewertet. Zu Beginn der ersten Zeile eines Bildes, wenn der Zählerinhalt gleich 1 ist, wird das RS-Kippglied 36 durch einen Impuls gesetzt. Dadurch ergibt sich am Q-Ausgang des RS-Kippgliedes 36 ein Impuls, der den ersten Adreßzähler 38 auf einen Zählerstand von Null zurücksetzt. Die erste Dekoderschaltung 43 wertet noch den Anfang des Testbereiches aus. Der Testbereich beginnt in der 25. Zeile bei dem Bildpunkt 41.473. Ist dieser Zählerstand erreicht, wird ein Impuls von der ersten Decoderschaltung 43 zum Rücksetzeingang des RS-Kippgliedes 36 geführt, und zum Setzeingang des RS-Kippgliedes 37. Der sich daraufhin am Q-Ausgang des RS-Kippgliedes 37 ergebende Impuls gibt den ersten Adreßzähler 38 frei (Zuführung zum Freigabeeingang E) und wird dem Verzögerungsglied 41 zugeleitet.

Die erste Dekoderschaltung 43 wertet des weiteren noch das Ende des Testbereiches und das Ende der Zeile 1240 aus. Ist das Ende des Testbereiches erreicht, d.h. das Ende der 64. Zeile oder der Bildpunkt 110.592, wird ein Impuls von der ersten Dekoderschaltung 43 erzeugt. Am Ende der Zeile 1240, oder bei Bildpunkt 2.142.720 wird ebenfalls ein Impuls erzeugt. Ein Schalter 44 führt entweder einen Impuls am Ende des Testbereiches oder einen Impuls am Ende der Zeile 1240 dem Rücksetzeingang des RS-Kippgliedes 37 zu. Falls nur ein Testsignal im Testbereich erzeugt werden soll, wird ein Impuls dem Rücksetzeingang des RS-Kippgliedes 37 zugeführt, wenn das Ende des Testbereiches erreicht ist. Aufgrund der Rücksetzung im RS-Kippglied 37 wird der erste Adreßzähler 38 gesperrt.

Die Zählerstände des ersten Adreßzählers 38 bilden Adressen für Abtastwerte eines Testsignals, die im Speicher 39 abgelegt sind. Der Ausgang des ersten Speichers 39 ist mit einem ersten Eingang 45 des Umschalters 40 verbunden. Dem anderen Eingang 46 des Umschalters 40 wird das Fernsehsignal zugeführt. Gesteuert wird der Umschalter 40 von dem Ausgangssignal am Q-Ausgang des RS-Kippgliedes 37, welches durch das Verzögerungsglied 41 verzögert wird. Das Verzögerungsglied 41 und der erste Adreßzähler 38 erhalten noch das Taktsignal. Die Verzögerungszeit im Verzögerungsglied 41 ist gleich der Verzögerungsdauer, die durch den ersten Adreßzähler 38 und den ersten Speicher 39 zur Erzeugung des Testsignals bewirkt wird. In der ersten Stellung des Umschalters 40 ist sein Eingang 45 mit seinem Ausgang 47 verbunden. Während dieser Zeit liegt der Zeitabschnitt "Testbereich" des Fernsehsignals vor. In seiner zweiten Stellung ist sein Eingang 46 mit seinem Ausgang 47 verbunden.

Die Auswertung der Ausgangstestsignale am Ausgang eines Schaltungsteils nimmt eine Auswerteschaltung 32, 33 oder 34 vor, die in Fig. 5 aufgeführt ist. Diese enthält eine zweite Analyseschaltung 48 mit einem zweiten Abschnittszähler 49 und einer zweiten Dekoderschaltung 50. Dem Rücksetzeingang des zweiten Abschnittszählers wird das Synchronisationssignal PIP über ein Verzögerungsglied 51 zugeführt. Die Verzögerungszeit des Verzögerungsgliedes 51 entspricht der Laufzeit des Testsignals durch das zu testende Schaltungsteil. Durch das Synchronisationssignal PIP wird der Zählerstand des zweiten Abschnittszählers 49 auf Null gesetzt. Das Taktsignal wird noch dem zweiten Abschnittszähler 49 und dem Verzögerungsglied 51 zugeführt. Die zweite Dekoderschaltung 50 hat die gleiche Funktion wie die erste Dekoderschaltung 43. Die Zählerstände des zweiten Abschnittszählers 49 werden von der zweiten Dekoderschaltung 50 ausgewertet. Dem Setzeingang eines RS-Kippgliedes 52 wird ein Impuls am Anfang der ersten Zeile zugeleitet. Wenn der Testbereich beginnt, wird dem Rücksetzeingang des RS-Kippgliedes 52 ein Impuls und dem Setzeingang eines weiteren RS-Kippgliedes 53 zugeführt. Am Ende des Testbereiches oder am Ende der Zeile 1240 wird über einen Schalter 54 dem Rücksetzeingang des RS-Kippgliedes 53 ein Impuls zugeführt.

Auf einen Zählerstand Null wird ein zweiter Adreßzähler 55 gesetzt, wenn am Q-Ausgang des RS-Kippgliedes 52 ein Impuls vorliegt. Freigegeben wird der zweite Adreßzähler 55 über seinen Freigabeeingang E durch ein Signal vom Q-Ausgang des RS-Kippgliedes 53. Die Zählerstände des zweiten Adreßzählers 55 bilden Adressen für einen zweiten Speicher 56, der Abtastwerte eines Mustersignals einer Vergleichsschaltung 57 zuführt. Der Q-Ausgang des RS-Kippgliedes 53 ist noch über ein Verzögerungsglied 58 mit dem Freigabeeingang E der Vergleichsschaltung 27 verbunden. Dem zweiten Adreßzähler 55 und dem Verzögerungsglied 58 werden noch das Taktsignal zugeführt.

In der Fig. 5 ist des weiteren noch exemplarisch ein Schaltungsteil 59 dargestellt, welches ein erstes Testsignal an seinem Eingang 60 und ein zweites Testsignal an seinem Eingang 61 empfängt. Ein Teil der Testsignale ist in der Fig. 5 jeweils dargestellt. Das Schaltungsteil 59 liefert an seinem Ausgang 62 ein Fernsehsignal mit einem Ausgangstestsignal. Wenn das Ausgangstestsignal vorliegt, wird die Vergleichsschaltung 57 freigegeben und es findet ein Vergleich zwischen dem Ausgangstestsignal und dem von dem zweiten Speicher 56 gelieferten Mustersignal statt. Liegt eine Differenz zwischen dem Ausgangstestsignal und dem Mustersignal vor, liefert die Vergleichsschaltung 57 eine Fehlermeldung in Form eines Impulses. Ein solcher Impuls kann zur Ansteuerung einer Leuchtdiode oder zur Ansteuerung einer Bildschirmeinheit dienen.

## Patentansprüche

1. Verarbeitungseinheit für mindestens ein Fernsehsignal, die wenigstens
- einen mit einem Eingang eines Schaltungsteils der Verarbeitungseinheit gekoppelten Testgenerator (29 bis 31) zur Einspeisung wenigstens eines Testsignals in Zeitabschnitte des Fernsehsignals und
- eine mit einem Ausgang des Schaltungsteils der Verarbeitungseinheit gekoppelte Auswerteschaltung (32 bis 34) zum Vergleich eines sich am Ausgang der Schaltungseinheit ergebenden Ausgangstestsignals und zur Abgabe einer Fehlermeldung bei Abweichung des Ausgangstestsignals von einem vorgegebenen Mustersignal enthält.

2. Verarbeitungseinheinheit nach Anspruch 1, dadurch gekennzeichnet, daß der Testgenerator (29 bis 31)
- eine erste Analyseschaltung (35) zur Bestimmung von periodisch auftretenden Zeitabschnitten eines Fernsehsignals,
- einen ersten Adreßzähler (38), der zum Zurücksetzen seines Zählerinhaltes auf einen Anfangswert und zum Starten bzw. Beenden des Zählvorgangs durch die erste Analyseschaltung vorgesehen ist,
- einen ersten Speicher (39) zum Erzeugen von unter eine Adresse des ersten Adreßzählers abgelegten Abtastwerten eines Testsignals und
- einen von der ersten Analyseschaltung gesteuerten Umschalter (40) enthält, der in seiner ersten Stellung zur Weiterleitung des Testsignals und in seiner zweiten Stellung zur Weiterleitung des Fernsehsignals an ein Schaltungsteil der Verarbeitungseinheit vorgesehen ist.

3. Verarbeitungseinheit nach Anspruch 2,
dadurch gekennzeichnet, daß die erste Analyseschaltung (35) einen Zeitabschnitte des Fernsehsignals zählenden ersten Abschnittszähler (42) und eine erste, Zählerstände zur Erzeugung von Steuersignalen für den ersten Adreßzähler (38) und den Umschalter (40) auswertende Dekoderschaltung (43) aufweist.

4. Verarbeitungseinheit nach Anspruch 3,
dadurch gekennzeichnet, daß die erste Analyseschaltung (35) zur Bestimmung eines bildinformationsfreien Zeitabschnittes vorgesehen ist.

5. Verarbeitungseinheit nach Anspruch 4,
dadurch gekennzeichnet, daß die erste Analyseschaltung (35) außerdem zur Bestimmung eines Zeitabschnittes eines Bildinformationsbereiches vorgesehen ist.

6. Verarbeitungseinheit nach einem der vorhergehenden Ansprüche,
dadurch gekennzeichnet, daß die Auswerteschaltung (32 bis 34),
- eine zweite Analyseschaltung (48) zur Bestimmung von periodisch auftretenden Zeitabschnitten eines Fernsehsignals,
- einen zweiten Adreßzähler (55), der zum Zurücksetzen seines Zählerinhaltes auf einen Anfangswert und zum Starten bzw. Beenden des Zählvorgangs durch die zweite Analyseschaltung vorgesehen ist,
- einen zweiten Speicher (56) zum Erzeugen von unter einer Adresse des zweiten Adreßzählers abgelegten Abtastwerten eines Mustersignals und
- eine Vergleichsschaltung (57) zum Vergleichen des Mustersignals und des Ausgangstestsignals und zum Ausgeben einer Fehlermeldung bei Abweichung des Ausgangstestsignals von dem Mustersignal enthält.

7. Verarbeitungseinheit nach Anspruch 6,
dadurch gekennzeichnet, daß die zweite Analyseschaltung (48) einen Zeitabschnitte des Fernsehsignals zählenden zweiten Abschnittszähler (49) und eine zweite, die Zählerstände zur Erzeugung von Steuersignalen für den zweiten Adreßzähler (55) und die Vergleichsschaltung (57) auswertende Dekoderschaltung aufweist.

8. Verarbeitungseinheit nach Anspruch 7,
dadurch gekennzeichnet, daß die zweite Analyseschaltung (48) zur Bestimmung eines bildinformationsfreien Zeitabschnittes vorgesehen ist.

9. Verarbeitungseinheit nach Anspruch 9,
dadurch gekennzeichnet, daß die zweite Analyseschaltung (48) außerdem zur Bestimmung eines Zeitabschnittes eines Bildinformationsbereiches vorgesehen ist.

10. Verwendung einer Verarbeitungseinheit nach einem der vorhergehenden Ansprüche in einer zur Übertragung von HDTV-Signalen vorgesehenen Empfangs- oder Sendeanordnung.
